# EUROPEAN PATENT SPECIFICATION

(11) **EP 1 219 805 B1**
(45) Date of publication and mention of the grant of the patent: **23.11.2005**
(21) Application number: 01130344.3
(22) Date of filing: 19.12.2001
(51) Int. Cl.: F02D 35/02, F02D 41/40

(54) **Fuel injection control system and method**
Verfahren und Vorrichtung zur Steuerung der Kraftstoffeinspritzung
Procédé et dispositif de commande de l'injection

(30) Priority: 19.12.2000 JP 2000385980
(43) Date of publication of application: 03.07.2002
(73) Proprietor: NISSAN MOTOR CO., LTD., Yokohama-shi Kanagawa-ken (JP)
(72) Inventor: Asahara, Yasuyuki, Yokosuka-shi, Kanagawa-ken (JP); Kondo, Masahiko, Yokohama-shi, Kanagawa-ken (JP); Hirano, Izuho, Yokohama-shi, Kanagawa-ken (JP); Takahashi, Naoki, Yokohama-shi, Kanagawa-ken (JP)
(74) Representative: Grünecker, Kinkeldey, Stockmair & Schwanhäusser Anwaltssozietät

(56) References cited:
- EP-A- 0 545 027
- DE-C- 19 844 746
- PATENT ABSTRACTS OF JAPAN vol. 012, no. 404 (M-757), 26 October 1988 (1988-10-26) & JP 63 147956 A (NIPPON DENSO CO LTD;OTHERS: 01), 20 June 1988 (1988-06-20)
- PATENT ABSTRACTS OF JAPAN vol. 012, no. 206 (M-708), 14 June 1988 (1988-06-14) & JP 63 009657 A (ISUZU MOTORS LTD), 16 January 1988 (1988-01-16)

## Description

### BACKGROUND OF THE INVENTION

The present invention relates to a fuel injection control system and a method of an internal combustion engine and, more particularly, to a fuel injection control system and a method of an internal combustion engine for reducing engine noise.

In internal combustion engines, it has heretofore been proposed to use a fuel injection control system for reducing engine noise as disclosed in Japanese Utility Model Application Laid-Open Publication NO. 7-44552. In such a technology, the fuel injection control system is arranged to execute fuel injection in two modes, i.e., a dual fuel injection mode to enable pilot fuel injection prior to main fuel injection and a normal fuel injection mode to enable only main fuel injection. With such an arrangement, the fuel injection modes are changed over during operation of the engine for a short time interval to detect engine vibrations at the two fuel injection modes for selecting one of the two fuel injection modes that provide a smaller engine vibration level to thereby reduce engine noise.

By the way, engine noise is broadly classified into combustion noise caused by combustion of air-fuel mixture and mechanical noise caused by movements of mechanical component parts and, especially in a diesel engine, a large proportion of mechanical noise is occupied with fuel injection noise such as injector noise arising from fuel injection. Of these factors, if contribution of combustion noise to engine noise is greater than that of mechanical noise, engine noise substantially corresponds to combustion noise and, therefore, it is possible for a noise level to be judged with vibration occurring at one point on the engine in a manner as achieved in the related art practice.

### SUMMARY OF THE INVENTION

However, the presence of combustion noise, whose contribution to engine noise is relatively lowered due to improvement over combustion, leads to a resultantly increased contribution level of mechanical noise. When this occurs, even if combustion noise is lowered by effectuating pilot fuel injection, an increase in the number of times in fuel injection deteriorates mechanical noise, with a resultant increase in engine noise.

Thus, in a case where two factors of combustion noise and mechanical noise must be considered, different noise measuring points provide different contribution levels such that engine vibration merely detected at the one point is not correlated with engine noise and a difficulty is encountered in accurately judging the engine noise level. When this takes place, the fuel injection modes are not properly changed over and noise can not be sufficiently reduced.

The present invention has been made with the above view and has an object of the present invention to provide a fuel injection control system of an internal combustion engine which enables accurate detection of engine noise to allow fuel injection control to be properly implemented on the basis of accurately detected engine noise to fully reduce engine noise.

It is another object of the present invention to provide a fuel injection control method of an internal combustion engine for controlling fuel injection so as to reduce engine noise.

According to a first aspect of the present invention, a fuel injection control system (11) is applied to an internal combustion engine (10) which has a fuel injection system executing a fuel injection. A control unit (40) is provided to control a fuel injection on the basis of a combustion noise derived from combustion in the internal combustion engine and a fuel injection noise derived from the fuel injection.

Besides, in the present invention, a fuel injection control method of an internal combustion engine (10), which has a fuel injection system executing a fuel injection, controls a fuel injection on the basis of a combustion noise derived from combustion in the internal combustion engine and a fuel injection noise derived from the fuel injection.

Other and further features, advantages, and benefits of the present invention will become more apparent from the following description taken in conjunction with the following drawings.

### BRIEF DESCRIPTION OF THE DRAWINGS

FIG. 1 is a schematic view of a fuel injection control system of a preferred embodiment according to the present invention;
FIG. 2 is a cross sectional view illustrating an internal structure of a fuel injector shown in FIG. 1;
FIG. 3 is a graph illustrating engine noise components in terms of fuel injection modes studied in the first preferred embodiment;
FIG. 4 is a view illustrating a characteristic of a map used in the first preferred embodiment shown in FIG. 1;
FIG. 5 is a flow chart illustrating the basic sequence of operation of the fuel injection control system of the first preferred embodiment;
FIGS. 6A and 6B are views illustrating characteristics of injector noise maps plotted in conjunction with the fuel injection modes used in a fuel injection control system of a second preferred embodiment according to the present invention;
FIGS. 7A and 7B are views illustrating characteristics of combustion noise maps plotted in conjunction with the fuel injection modes used in the fuel injection control system of the second preferred embodiment;
FIG. 8 is a flow chart of the basic sequence of operation of the fuel injection control system of the second preferred embodiment;
FIG. 9A and 9B are views illustrating characteristics of injection noise maps and combustion noise maps plotted as to the difference values used in a fuel injection control system of a third preferred embodiment of the present invention;
FIG. 10 is a flow chart illustrating the basic sequence of operation of the fuel injection control system of the third preferred embodiment;
FIG. 11A and 11B are views illustrating characteristics of injection noise maps plotted as to the difference values in conjunction with a low coolant temperature and a high coolant temperature used in a fuel injection control system of a fourth preferred embodiment according to the present invention;
FIG. 12A and 12B are views illustrating characteristics of combustion noise maps plotted as to the difference values in conjunction with a low coolant temperature and a high coolant temperature used in the fuel injection control system of the fourth preferred embodiment;
FIG. 13 is a flow chart of the basic sequence of operation of the fuel injection control system of the fourth preferred embodiment;
FIG. 14 is a flow chart of the basic sequence of operation of a fuel injection control system of a fifth preferred embodiment of the present invention;
FIG. 15 is a structural view of a diesel engine commonly used for fuel injection control systems of sixth and seventh preferred embodiments according to the present invention;
FIG. 16 is a flow chart of the basic sequence of operation of the fuel injection control system of the sixth preferred embodiment; and
FIG. 17 is a flow chart of the basic sequence of operation of the fuel injection control system of the seventh preferred embodiment.

### DETAILED DESCRIPTION OF THE PREFERRED EMBODIMENTS

To describe the present invention more in detail, fuel injection control systems of first to seventh preferred embodiments of the present invention to implement corresponding methods will be explained with reference to the accompanied drawings below.

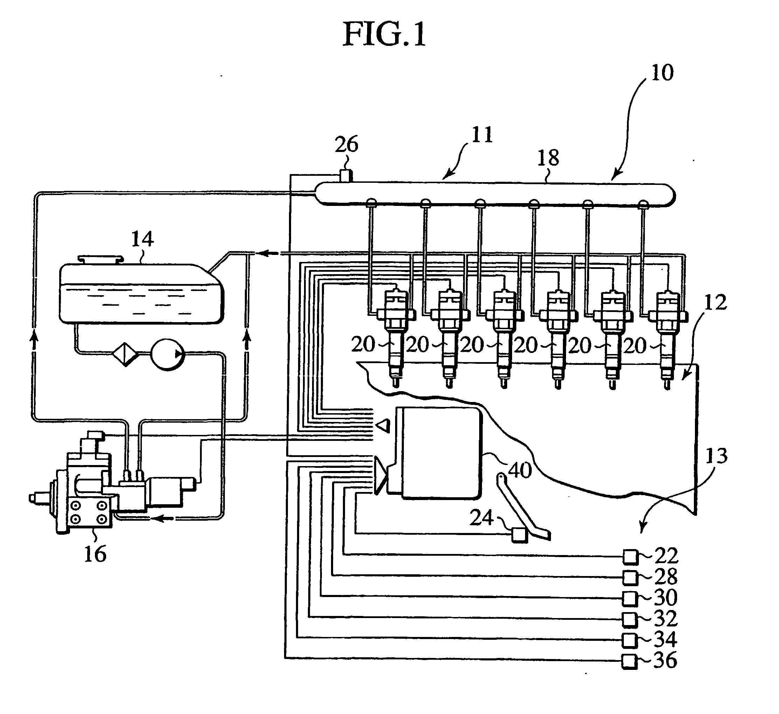

Referring to FIG. 1, there is shown an internal combustion engine system 10 incorporating a fuel injection control system 11 of the first preferred embodiment according to the present invention, with the engine main body including a diesel engine 12 of a direct fuel injection type.

The fuel injection control system 11 is constructed of a fuel tank 14, a fuel supply pump 16 connected to the fuel tank 14, a common rail 18 supplied with fuel under pressure from the fuel supply pump 16 to store or accumulate fuel therein at a high pressure, and a plurality of electromagnetic type fuel injection valves or fuel injectors 20 mounted to the engine 12 for periodically injecting fuel under high pressure into respective combustion chambers of the engine 12. The common rail 18 stores or accumulates fuel under high pressure to be sequentially supplied to the fuel injectors 20.

The fuel injection control system 11 includes an engine parameter sensing section 13 for sensing engine parameters representing engine operating conditions. In particular, the engine parameter sensing section 13 includes an engine speed sensor 22 which detects an engine speed (RPM), an accelerator opening sensor 24 which detects an accelerator opening degree representing a demanded output torque value, a fuel injection pressure sensor 26 which detects the level of a fuel injection pressure, a fuel injection quantity sensor 28 which detects a fuel injection quantity for each stroke of the engine or for each engine cycle, an air intake pressure sensor 30 which detects a pressure level in an intake manifold (not shown) of the engine 12, an oxygen sensor 32 which is mounted to an exhaust pipe (now shown) of the engine to detect an oxygen concentration contained in exhaust gases passing through the exhaust pipe, an air intake quantity sensor 34 which detects an air intake quantity sucked into each combustion chamber, and an engine coolant temperature sensor 36 which detects the temperature of at least one of water coolant or oil coolant of the engine. Thus, the sensors 22 to 36 produce various detection signals as the engine operating parameters representing the operating conditions of the engine 12.

An engine control unit (ECU) 40 includes a microcomputer (not shown) which is programmed to be responsive to the detection signals representing the engine speed, the accelerator opening, the fuel injection pressure level, the fuel injection timings, the fuel injection volumes, the air intake pressure level, the air intake volume and the oxygen concentration of the exhaust gases, and the like. The ECU 40 is programmed for controlling a fuel injection pressure level, fuel injection timings and a fuel injection quantity in response to the engine speed and the accelerator opening to implement the fuel injection in first and second fuel injection modes. In the first fuel injection mode (which is referred to as a normal fuel injection mode), a single fuel injection is effectuated for each engine cycle in each combustion chamber. In the second fuel injection mode (which is referred to as a pilot fuel injection mode), fuel is injected into each combustion chamber at plural injection timings for each engine cycle to initiate pilot fuel injection with a small fuel volume prior to execution of main fuel injection to preclude an ignition delay for thereby minimizing combustion noise.

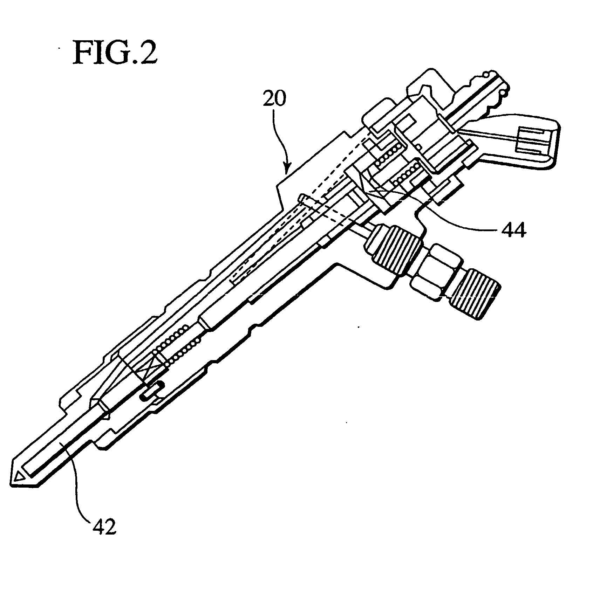

The injector 20 shown in an enlarged form in FIG. 2 includes a needle 42 which opens or closes an injector opening, and an electromagnetic valve 44 associated with the needle 42 and is supplied with an output signal from the ECU 40 such that the electromagnetic valve 44 is actuated to vary a pressure balance to allow the needle 42 to be moved upward or downward to enable fuel injection. When this takes place, the needle 42 creates injector noise or fuel injection noise which is a part of mechanical noise due to impact shocks caused during a closing period. In the first fuel injection mode, i.e. during normal fuel injection, fuel is injected once for each engine cycle. In the second fuel injection mode, i.e. when implementing pilot fuel injection, fuel injected twice in one cycle, with a resultant increase in injector noise.

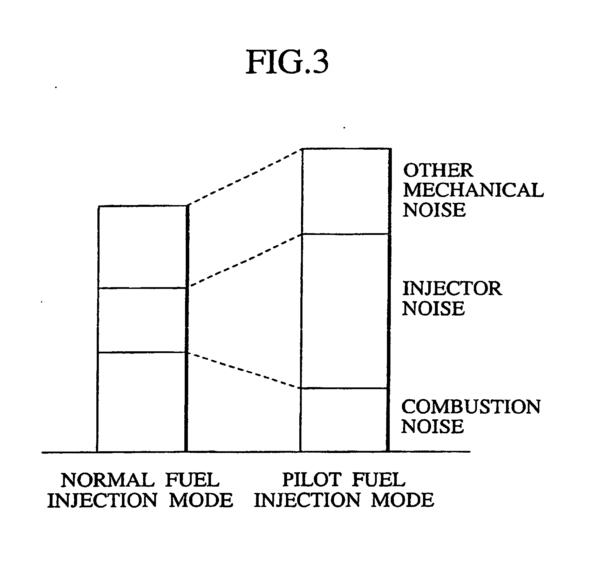

FIG. 3 is a schematic view illustrating the relationship between the injection modes and the noise level composed of various noise components involving combustion noise, injector noise and other mechanical noise. As seen in FIG. 3, although the presence of pilot fuel injection enables reduction in combustion noise, injection noise increases, resulting in an increase in engine noise especially when a reduction level of combustion noise remains at a low value.

The above operating characteristics are utilized for preparing a map describing engine noise levels by preliminarily measuring engine noises that occur during the first injection mode (i.e. in the normal fuel injection mode with a single fuel injection mode) and the second fuel injection mode (i.e. in the pilot fuel injection mode with plural fuel injection modes), in terms of the engine speed and the accelerator opening. That is, the map is prepared such that a map level "1" is assigned when engine noise in the normal fuel injection mode is higher than that in the pilot fuel injection mode, and, if not, a map level "0" is assigned. The map thus prepared is stored in a memory of the ECU 40. During operations of the engine 12, the microcomputer reads out the engine speed and the accelerator opening and also reads out the aforementioned map levels from the map in conjunction with the engine speed and the accelerator opening for implementing fuel injection in the pilot fuel injection mode when the map level remains at "1" and in the normal fuel injection mode when the map level remains at "0".

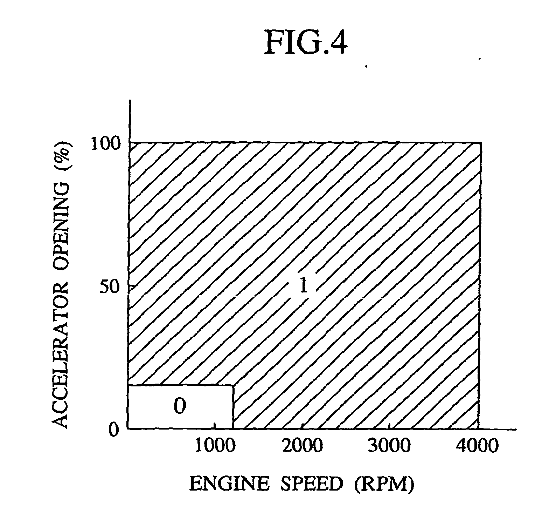

FIG. 4 shows an example of the aforementioned map wherein the "0" map level is assigned to a low engine speed with a low load operating range and the "1" map level is assigned in a remaining operating range. That is, since combustion noise originally remains at a low level in the low engine speed with the low load operating range, the presence of pilot fuel injection has a less attenuation effect on combustion noise and injector noise has the increased level in the pilot fuel injection mode. Consequently, the normal fuel injection mode is selected during the engine operating condition in the low engine speed with low load operating range. Since, in the other remaining operating range, a combustion noise attenuation effect caused by the pilot fuel injection mode increases and, therefore, the pilot fuel injection mode is selected.

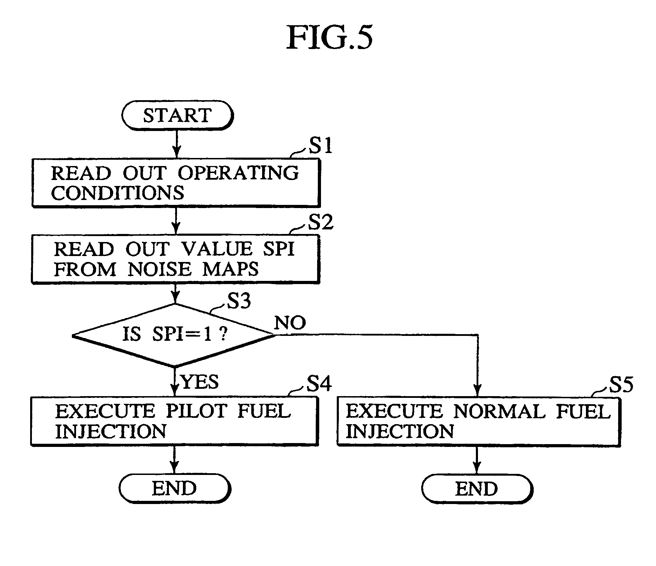

FIG. 5 is a flow chart illustrating the basic sequence of operation of the fuel injection control system shown in FIG. 1 to carry out a fuel injection control method by using the aforementioned map.

In step S1, the ECU 40 reads out the operating parameters such as the engine speed and the accelerator opening, and the like.

In step S2, the ECU 40 reads out the value SP1 of the aforementioned noise map associated with the read out operating parameters.

In step S3, the ECU 40 discriminates whether the value SP1 is "1" and, if so, the operation goes to step S4 to execute pilot fuel injection whereas, when the value SP1 is "0", the operation goes to step S5 to effectuate normal fuel injection.

During the normal fuel injection mode, the engine 12 is arranged such that so-called low temperature premixed combustion is performed in the combustion chamber to minimize combustion noise. In such a low-temperature premixed combustion, a large quantity of EGR, which is about twice the ordinary EGR level, is introduced and a fuel injection is carried out with strongly swirling air while its injection timing is considerably delayed compared with the ordinary injection timing. As a result, soot formation and NOx emission can be effectively reduced, too.

It will now be understood from the foregoing description that, in accordance with the fuel injection control apparatus of the first preferred embodiment, the use of a single map correlated with the operating parameters involving only the engine speed and the accelerator opening which corresponds to an engine load enables the fuel injection modes to be readily changed over for thereby attenuating engine noise. Especially, the engine noise can be effectively reduced in a steady operating condition substantially defined by the engine speed and the accelerator opening.

A fuel injection control system of a second preferred embodiment according to the present invention is described below in detail. In the second preferred embodiment, a map is modified to be different from that used in the fuel injection control system of the first preferred embodiment.

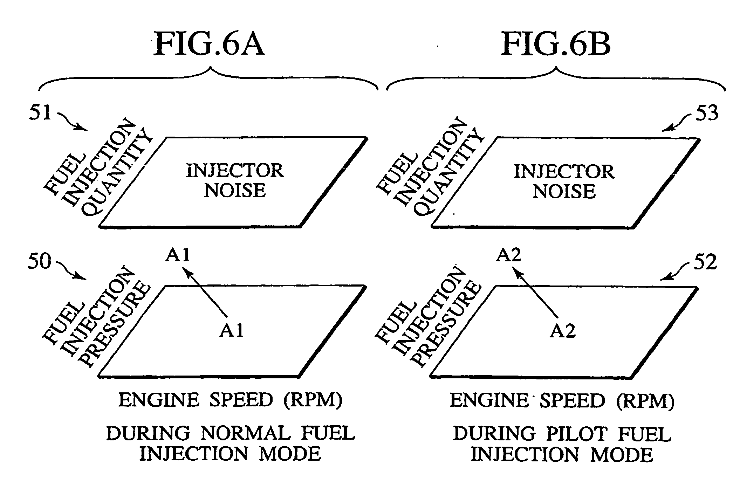

The memory of the ECU 40 has noise maps correlated with the normal fuel injection mode and the pilot fuel injection mode. The injector noise maps are described with the noise levels associated with principal operating parameters, involving the engine speed, a fuel injection quantity and a fuel injection pressure, both of which have a high contribution ability to injection noise. In particular, the memory of the ECU 40 stores injector noise maps 50 and 51 shown in FIG. 6A and injector noise maps 52 and 53 shown in FIG. 6B. The injector noise map 50 is described with noise level data A1 (for the normal fuel injection mode), and the noise map 52 is described with noise level data A2 (for the pilot fuel injection mode), with the maps 50 and 53 being plotted in terms of the parameters composed of the engine speed and the fuel injection pressure. The injector noise maps 51 and 53 are described with final injector noise level data obtained by correcting noise level data A1 and A2 in terms of the fuel injection quantity, respectively.

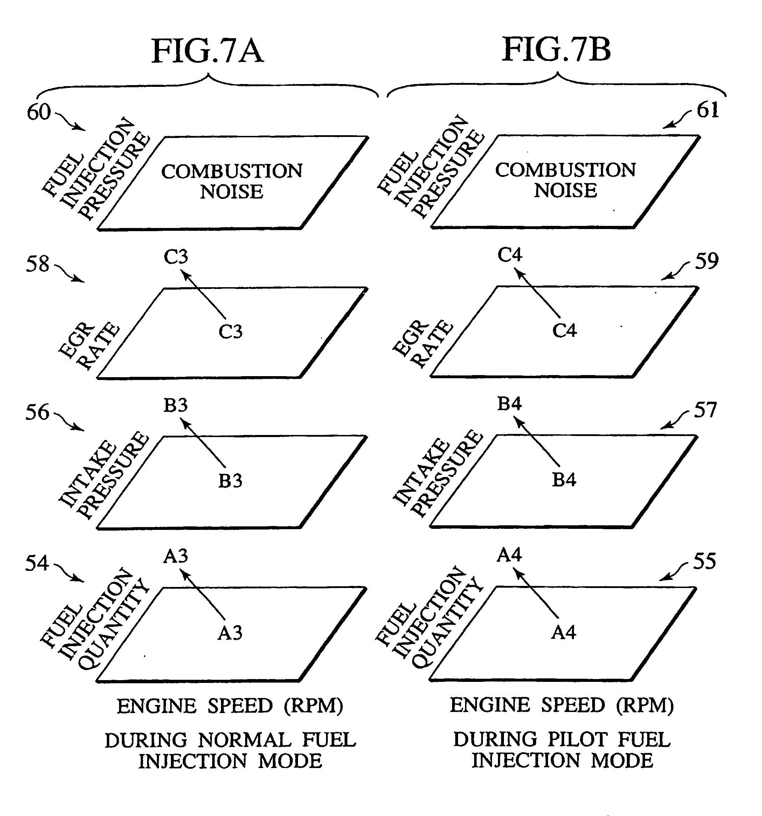

On the other hand, the combustion noise map is described with noise levels correlated with the respective principal operating parameters, composed of the engine speed, the fuel injection quantity, an air intake pressure, an EGR rate and the fuel injection pressure, which have the high contribution ability to combustion noise. In particular, the memory of the ECU 40 stores combustion noise maps 54, 56, 58 and 60 shown in FIG. 7A and noise maps 55, 57, 59 and 61 shown in FIG. 7B. The combustion noise map 54 is described with noise level data A3 (for the normal fuel injection mode), and the noise map 55 is described with noise level data A4 (for the pilot fuel injection mode), with noise level data A3 and A4 being plotted in terms of the parameters composed of the engine speed and the fuel injection pressure. The combustion noise maps 56 and 57 are described with injector noise level data B3 (for the normal fuel injection mode) and B4 (for the pilot fuel injection mode), with the noise maps 56 and 57 being correlated with the air intake pressure and the noise level data A3 and A4, respectively. The combustion noise maps 58 and 59 are described with combustion noise level data C3 (for the normal fuel injection mode) and C4 (for the pilot fuel injection mode), with the noise maps 58 and 59 being correlated with the EGR rate and the noise level data B3 and B4, respectively. The combustion noise maps 60 and 61 are described with final combustion noise level data (for the normal fuel injection mode) and combustion noise level data (for the pilot fuel injection mode), respectively, with the noise maps 60 and 61 being correlated with noise level data C3 and C4 associated with the fuel injection pressure.

The engine speed, the air intake pressure, the fuel injection quantity and the fuel injection pressure are detected by the sensors 22, 30, 28 and 26, respectively, and the EGR rate are calculated from the oxygen concentration in the exhaust manifold and the air intake quantity detected by the oxygen sensor 32 and the air intake quantity sensor 34.

The noise levels described in the respective injector noise maps correspond to noise level data which has been preliminarily measured in a manner described below.

First, the normal fuel injection mode is effectuated to initiate normal combustion to measure engine noise. This engine noise is whole engine noise constituted with combustion noise and mechanical noise including injector noise. Next, the engine is motorized to measure the other mechanical noise without actuating the fuel injectors. Such other mechanical noise is that except for the injector noise. Lastly, a piston and a con rod are removed from the engine and the engine is motorized in a state where the fuel injectors is actuated while combustion is disenabled to measure the first noise, and then the second noise is measured under the same engine structure and in a state where the engine is motorized but the fuel injectors is not actuated while combustion is disenabled. Engine noise obtained by subtracting the second noise from the first noise constitutes the fuel injector noise. The combustion noise is obtained by subtracting the injector noise and the other mechanical noise except for the injector noise from the whole engine noise.

In the above manner, the injector noise maps and the combustion noise maps are obtained to be used for obtaining injector noise and combustion noise in the normal fuel injection mode and the pilot fuel injection mode during the operating condition of the engine for thereby extracting the sum of injector noise and combustion noise which occur during the normal fuel injection mode and the pilot fuel injection mode to implement a comparison for the engine noise levels. If the noise level in the normal fuel injection mode is greater than that of the plot fuel injection mode, then, the pilot fuel injection mode is carried out and, if the noise level in the pilot fuel injection mode is greater than that of the normal fuel injection mode, then, the normal fuel injection mode is carried out.

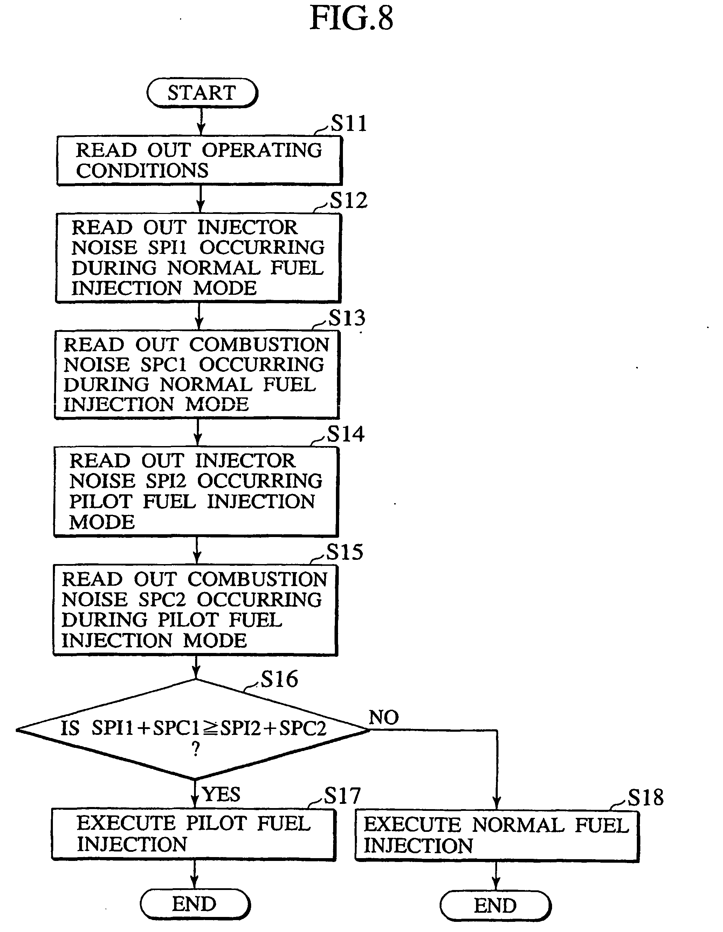

Now, the operation of the fuel injection control system of the second preferred embodiment is described with reference to a flow chart of FIG. 8 using the aforementioned noise maps.

In step S11, the ECU 40 reads out the engine operating conditions such as the engine speed, the fuel injection quantity, the air intake pressure, the EGR rate and the fuel injection pressure, and the like.

In step S12, the ECU 40 sequentially conducts a search for and reads out the injector noise SPI1 for the normal fuel injection mode from the injector noise maps on the basis of the engine speed, the fuel injection pressure and the fuel injection quantity.

In step S13, the ECU 40 sequentially conducts a search for the combustion noise maps on the basis of the engine speed, the fuel injection quantity, the air intake pressure, the EGR rate and the fuel injection pressure and reads out the combustion noise SPC1 for the normal fuel injection mode.

Subsequently, similar searches are conducted for the noise maps such that, in step S14, the ECU 40 reads out the injector noise SPI2 for the pilot fuel injection and, in step S15, the ECU 40 reads out the combustion noise SPC2 for the pilot fuel injection.

In step S16, the ECU 40 discriminates whether the sum (SPI1 + SPC1) of the injector noise SPI1 for the normal fuel injection mode and the combustion noise SPC1 exceeds the sum (SPI2 + SPC2) of the injector noise SPI2 and the combustion noise SPC2 or is below the same. When it is discriminated to be "YES", the operation goes to step S17 to initiate the pilot fuel injection and, if not, the operation goes to step S18 to execute the normal fuel injection.

It will now be understood from the foregoing description that, in accordance with the fuel injection control apparatus of the second preferred embodiment, the injector noise and the combustion noise can be obtained in more accurate manner. Especially, the engine noise can be effectively reduced in a transit operating condition of the engine operation.

A fuel injection control system of a third preferred embodiment according to the present invention is described below in detail. In the third preferred embodiment, noise maps are modified to be different from those used in the fuel injection control system of the second preferred embodiment in that the noise maps have modified numerical values.

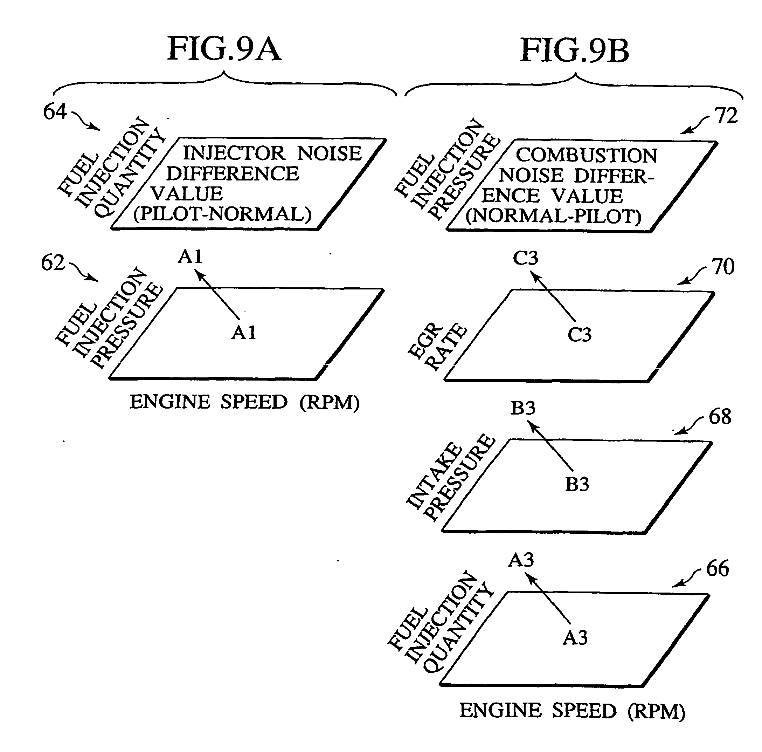

That is, in the third preferred embodiment, the ECU 40 has no map which has both the noise levels for the pilot fuel injection mode and for the normal fuel injection mode associated with the injector noise and the combustion noise. In particular, the memory of the ECU 40 stores injector noise maps 62 and 64 shown in FIG. 9A. The injector noise map 62 has noise level data A1 which is plotted in terms of the engine speed and the fuel injection pressure. The noise map 64 has an injector noise difference value corresponding to a difference between the pilot fuel injection noise level and the normal fuel injection noise level and is correlated with the fuel injection quantity and the noise level data A1. In FIG. 9B, the noise map 66 has the noise level data A3 correlated with the engine speed and the fuel injection quantity. The noise map 68 has corrected noise level data B3 which is plotted in terms of the air intake pressure and the noise level data B3. Likewise, the noise map 70 has corrected noise level data C3 which is plotted in terms of the EGR rate and the noise level data B3. The noise map 72 has a combustion noise difference value corresponding to a difference between the normal fuel injection noise level and the pilot fuel injection noise level and is correlated with the fuel injection pressure and the noise level data C3. During engine operation, the noise levels obtained in the aforementioned noise maps are compared on the basis of the detected engine operating parameters. If, in this instance, the former has a larger value, then, the normal fuel injection is implemented primarily because of the larger noise level caused in the pilot fuel injection mode. If, in contrast, the latter has the larger value, then, the pilot fuel injection is initiated because of the larger noise level of the normal fuel injection mode.

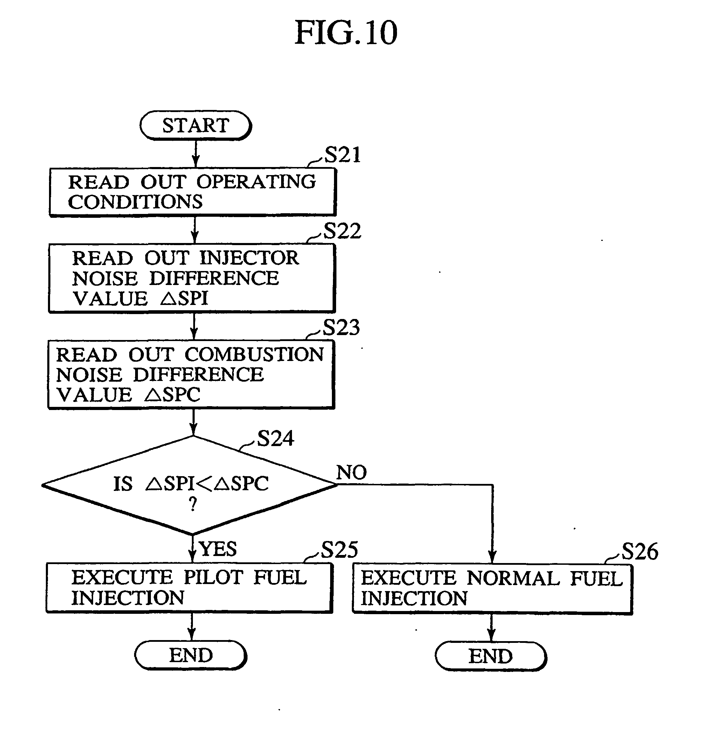

Now, the operation of the fuel injection control system of the third preferred embodiment is described with reference to a flow chart of FIG. 10 using the aforementioned injection noise maps.

In step S21, the ECU 40 reads out the engine operating conditions such as the engine speed, the fuel injection quantity, the air intake pressure, the EGR rate and the fuel injection pressure, and the like.

In step S22, the ECU 40 discriminates a difference Δ SPI in the injector noise between the pilot fuel injection mode and the normal fuel injection mode from the injector noise maps on the basis of the read out operating parameters.

In step S23, the ECU 40 reads out the difference Δ SPC in combustion noise associated with the normal fuel injection mode and the pilot fuel injection mode from the combustion noise map on the basis of the read out operating parameters.

In step S24, the ECU 40 discriminates whether the value Δ SPI is smaller than the value Δ SPC and, if so, the operation goes to step S25 to initiate the pilot fuel injection. If not, the operation goes to step S26 to initiate the normal fuel injection.

With such arrangement, it is possible for the fuel injection control system of the third preferred embodiment to use a half number of the noise maps to execute the same fuel injection control as that of the second preferred embodiment for thereby enabling the memory of the ECU 40 to be effectively utilized.

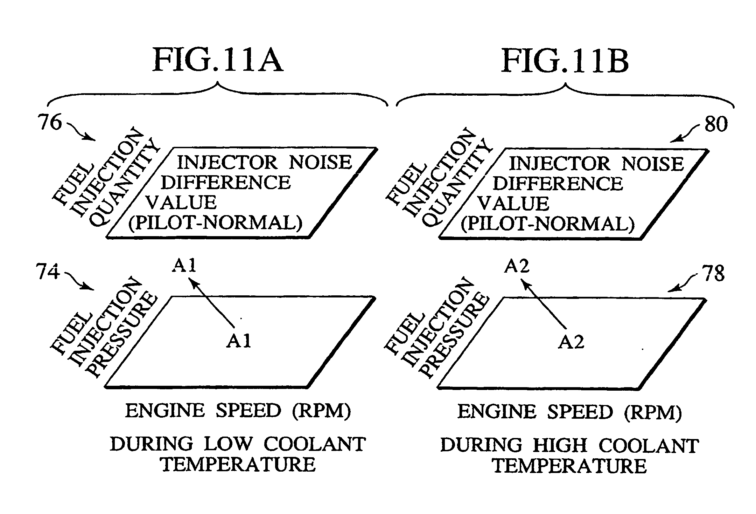

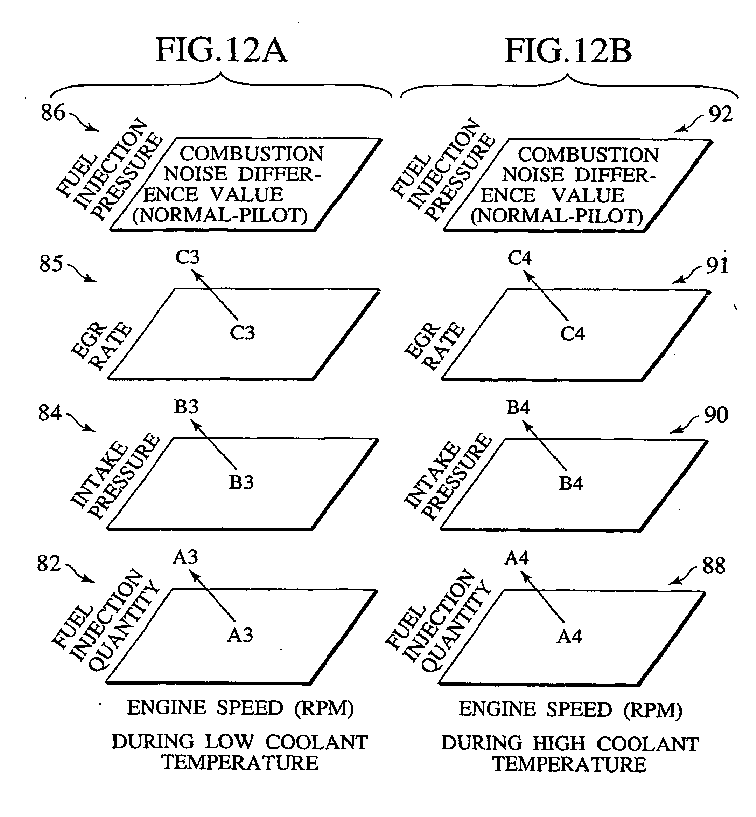

A fuel injection control system of a fourth preferred embodiment is described below in detail with reference to FIGS. 11 to 13. In the fourth preferred embodiment, the fuel injection control system detects the engine coolant temperature as represented in FIGS. 11A and 11B and FIGS. 12A and 12B and has first and second maps correlated with the low coolant temperature range or zone and the high coolant temperature range or zone, respectively. The first and second maps are changed over in dependence on the low and high coolant temperature zones. In FIGS. 11A and 11B, the noise maps 74 and 78 have noise level data A1 and A2, respectively, which are correlated with the engine speed and the fuel injection pressure. The noise maps 76 and 80 have injector noise difference values corresponding to differences between the pilot fuel injection noise level and the normal fuel injection noise level and are correlated with the fuel injection quantity and the noise level data A1 and A2, respectively. Also, the noise maps 76 and 80 are prepared in correspondence with the low coolant temperature range and the high coolant temperature range, respectively, for thereby enabling the ECU 40 to change over the fuel injection modes according to the low coolant temperature range and the high coolant temperature range.

In the fourth preferred embodiment, the ECU 40 also stores a first group of noise maps 82 to 86 and a second group of noise maps 88 to 92, shown in FIGS. 12A and 12B, both of which are correlated with the low coolant temperature range and the high coolant temperature range, respectively. In particular, the noise maps 82 to 86 are associated with the low coolant temperature range, and the noise maps 88 to 92 are associated with the high coolant temperature associated. More specifically, the noise map 82 has noise level data A3 which is plotted in terms of the engine speed and the fuel injection quantity. The noise map 84 has noise level data B3 which is plotted in terms of the air intake pressure and the noise level data A3. The noise map 85 has noise level data C3 which is plotted in terms of the EGR rate and the noise level data B3. The noise map 86 has a combustion noise difference value corresponding to a difference between the normal fuel injection noise level and the pilot fuel injection noise level and is correlated with the fuel injection pressure and the noise level data C3. Similarly, the noise map 88 has noise level data A4 which is plotted in terms of the engine speed and the fuel injection quantity. The noise map 90 has noise level data B4 which is plotted in terms of the air intake pressure and the noise level data A4. The noise map 91 has noise level data C4 which is plotted in terms of the EGR rate and the noise level data B4. The noise map 92 has a combustion noise difference value corresponding to a difference between the normal fuel injection noise level and the pilot fuel injection noise level and is correlated with the fuel injection pressure and the noise level data C4. Thus, the ECU 40 is enabled to select the noise map in dependence on the engine coolant temperature.

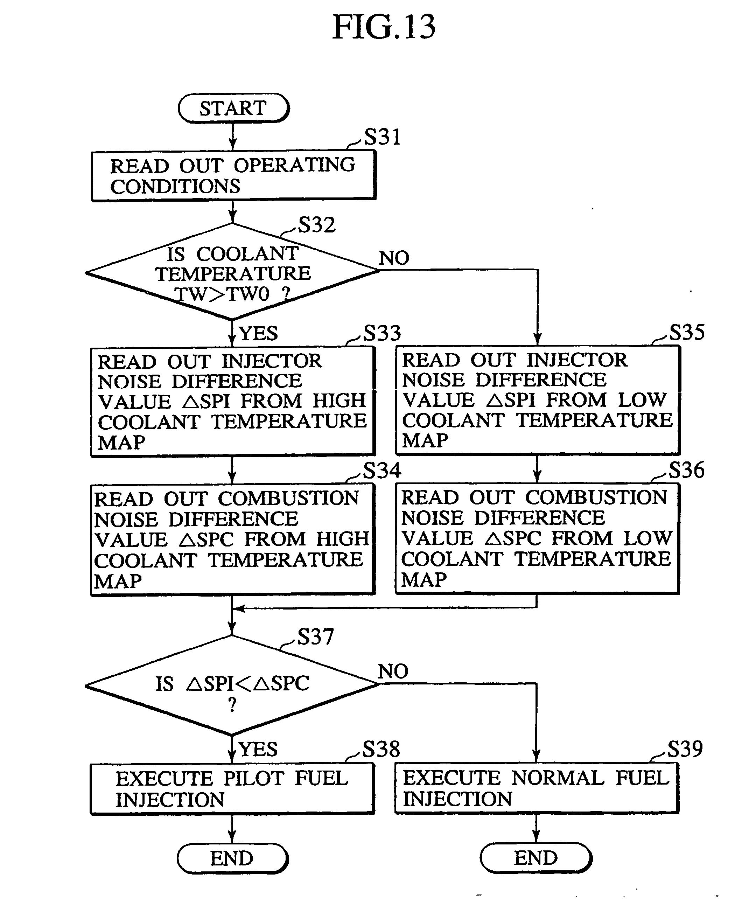

FIG. 13 is a flow chart illustrating the basic sequence of operational steps of the fuel injection control system of the fourth preferred embodiment according to the present invention.

In step S31, the ECU 40 reads out the operating condition of the engine including an engine coolant temperature TW.

In step S32, the ECU 40 discriminates whether the engine coolant temperature TW is higher than a predetermined coolant temperature TW0. Also, in step S32, if the engine coolant temperature TW is higher than a predetermined coolant temperature TWO, a search for the injector noise difference value Δ SPI and the combustion noise difference value Δ SPC are conducted using the noise maps 78 and 80 and the noise maps 88 to 92 associated with the high engine coolant temperature in steps S33 and S34, respectively.

More specifically, the fourth preferred embodiment shown in FIG. 13 is different from the third preferred embodiment shown in FIG. 10 in the following scheme. That is, if the engine coolant temperature TW detected by the sensor 36 is higher than the predetermined coolant temperature level TWO, then, steps S33 and S34 use the noise maps correlated with the high coolant temperature to conduct the search for the injector noise difference value Δ SPI and the combustion noise difference value Δ SPC.

In contrast, if the engine coolant temperature TW detected by the sensor 36 is below the predetermined coolant temperature level TWO, then, step S35 and S36 use the noise maps correlated with the low coolant temperature to conduct the search for the injector noise difference value Δ SPI and the combustion noise difference value Δ SPC.

With such arrangement, it is possible for the fuel injection control system of the fourth preferred embodiment to reduce the engine noise when the engine coolant temperature is low, for example, immediately after the engine starts.

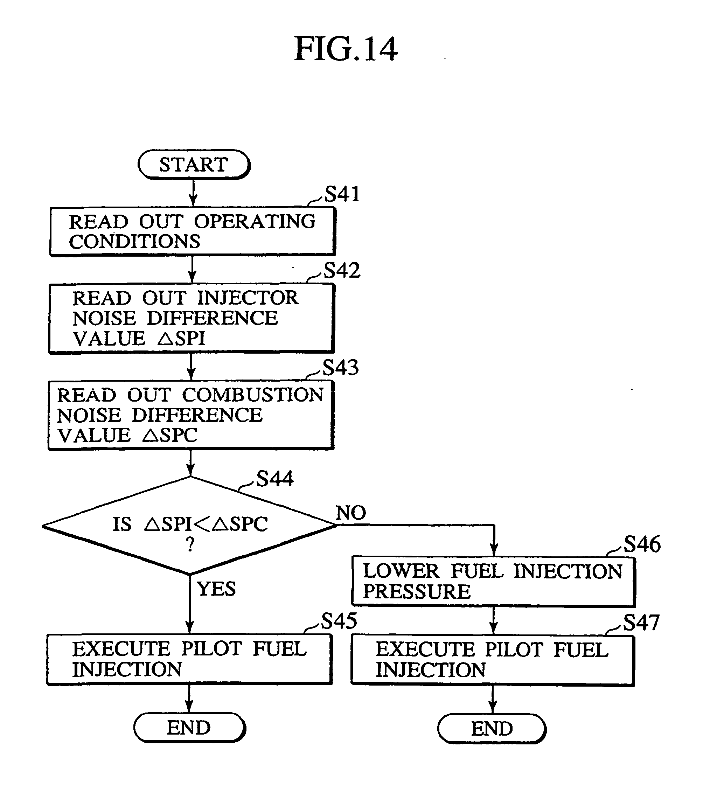

A fuel injection control system of a fifth preferred embodiment of the present invention is described below in detail with reference to a flow chart of FIG. 14 which illustrate the basic sequence of operation of the fuel injection control system of the fifth preferred embodiment. As shown in steps S46 and S47 of the flow chart shown in FIG. 14, the fifth preferred embodiment differs from the third preferred embodiment in that when the pilot fuel injection has the larger noise, the normal fuel injection is not initiated and the fuel injection pressure is lowered while executing the pilot fuel injection. The lower the fuel injection pressure, the lower will be the injector noise level and, therefore, the injector noise level is lowered in the above technology for thereby enabling reduction in the engine noise.

The above described embodiments have been discussed in conjunction with the technologies wherein the noise levels have been preliminarily measured to obtain the measured results which are described in the noise maps to be used for executing the fuel injection control so as to change over the fuel injection modes and the fuel injection pressure.

Next, fuel injection control systems of other preferred embodiments of the present invention for controlling the change-over of the fuel injection modes while detecting the noise levels of the engine during the operation thereof will be described below in detail.

The other preferred embodiments are based on the fuel injection control system shown in FIG. 1 and the fuel injector shown in FIG. 2 and, therefore, a detailed description of the components parts is herein omitted for the sake of simplicity.

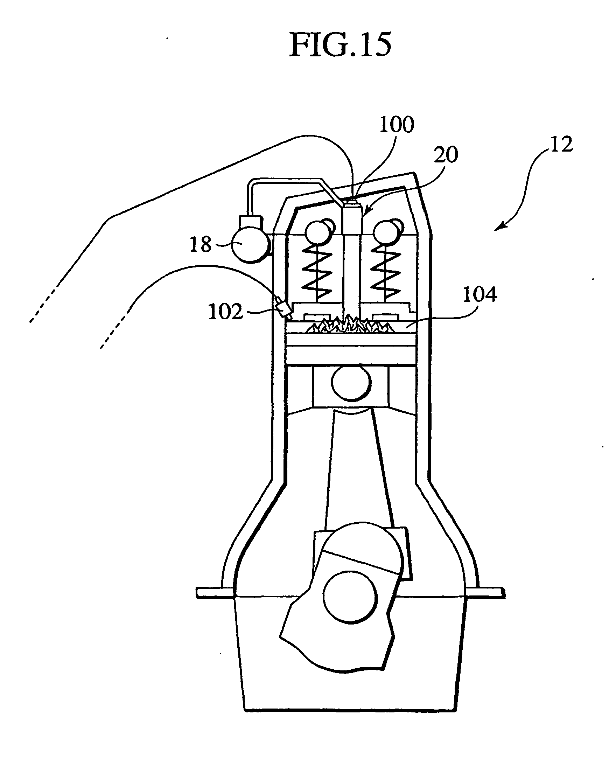

FIG. 15 is a schematic cross sectional view of the common rail type diesel engine 12 to be referred to in the other preferred embodiments, with like parts bearing the same reference numerals as those used in FIG. 1. In FIG. 15, the diesel engine 12 is shown as having an accelerator sensor 100 mounted to a main body of a fuel injector 20 to measure a vibration level to produce a vibration signal. The vibration signal representing the measured value is multiplied with a transmission characteristic between the vibration level and the noise level stored in the memory of the ECU to obtain the injector noise. Also, a cylinder head of the diesel engine 12 has a cylinder pressure sensor 102 for detecting the pressure in a combustion chamber 104 to detect a pressure level in the cylinder to produce a cylinder pressure signal. The cylinder pressure signal representing the measured pressure level is multiplied with a transmission characteristic between the measured pressure level and the noise level stored in the memory of the ECU to obtain the combustion noise.

It is to be noted that the detection for the aforementioned noises and the following change-over operation of the fuel injection control modes is implemented only during an idling operation of the engine. That is, as shown in the graph of FIG. 4 of the first preferred embodiment, since the injector noise in the pilot fuel injection mode increases to a higher value than the combustion noise only during the low engine speed with the low operating load and the engine noise includes other noise components than the engine noise during traveling condition of a vehicle, the aforementioned fuel injection control is actually implemented only during the idling operation of the engine.

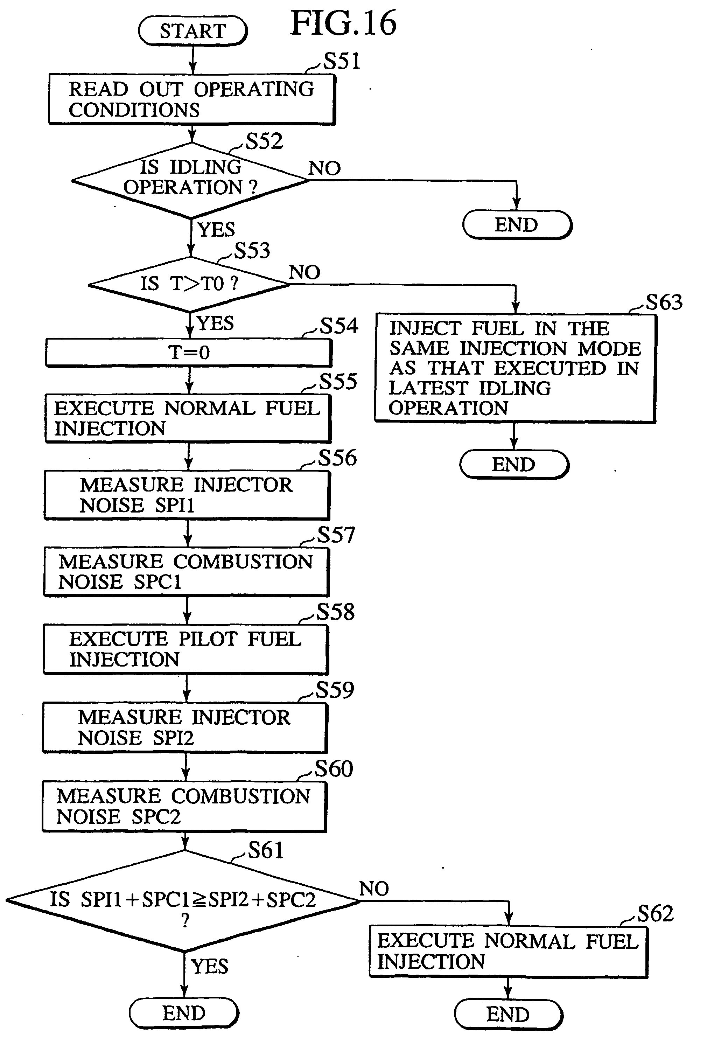

A fuel injection control system of a sixth preferred embodiment of the present invention is carried out in a flow chart of FIG. 16 which illustrates the basic sequence of operation for detecting the noise level.

In step S51, the engine operating conditions are read out.

In step S52, it is discriminated whether the engine remains in the idling condition or in the steady operating condition of the engine. When it is discriminated that the engine enters the idling operation, the operation goes to step S53.

Step S53 compares a time interval T, elapsed from the noise evaluating time instant caused by the latest change-over of the fuel injection modes, with a predetermined time interval T0. When it is discriminated that the elapsed time interval T is less than the predetermined time interval T0, the operation goes to step S63 which executes the fuel injection in the same fuel injection mode as that in the latest idling operation. When, in contrast, it is discriminated that the elapsed time interval T is greater than the predetermined time interval T0, the operation goes to step S54 which resets to a condition T = 0 with the following execution of the fuel injection in the normal fuel injection mode.

In step S56, the injector noise level SPI1 is measured on the basis of the detection delivered from the acceleration sensor 100 and, in step S57, the combustion noise level SPC1 is measured on the basis of the detection signal produced by the cylinder pressure sensor 102.

In consecutive step S58, the ECU 40 changes over the fuel injection modes into the pilot fuel injection mode to allow in steps S59 and S60 to measure the injector noise SPI2 and the combustion noise SPC2, respectively.

In subsequent step S61, a comparison is made between the sum SPI1 + SPC1 of the noise levels in the normal fuel injection mode and the sum SPI2 + SPC2 of the noise levels in the pilot injection mode. In case of SPI1 + SPC1 > SPI2 + SPC2, since the noise level of the pilot fuel injection mode is less than that of the normal fuel injection mode, the pilot fuel injection mode is continuously implemented and, if not, the operation goes to step S62 to change over the fuel injection mode into the normal fuel injection mode.

With such arrangement of the fuel injection control system of the sixth preferred embodiment, since the engine noise level of the normal fuel injection mode and that of the pilot fuel injection mode are detected and either one of the fuel injection modes to provide the lowest noise is selected, the engine noise can be effectively reduced. Also, by interrupting the change-over operation for the given time interval, the deterioration in operating performance that would occur due to frequent changing over of the engine operation can be effectively precluded.

A fuel injection control system of a seventh preferred embodiment of the present invention is described below in detail to illustrate how the noise level is detected.

The seventh preferred embodiment is modified from the sixth preferred embodiment such that when the noise level during the normal fuel injection mode is less than that of the pilot fuel injection mode, the pilot fuel injection mode is carried out with the decreased fuel injection pressure. Even in a case where the noise is deteriorated in the pilot fuel injection mode, the presence of the lowered fuel injection pressure leads to a reduction in the noise level in the pilot fuel injection mode for thereby enabling a reduction in the engine noise.

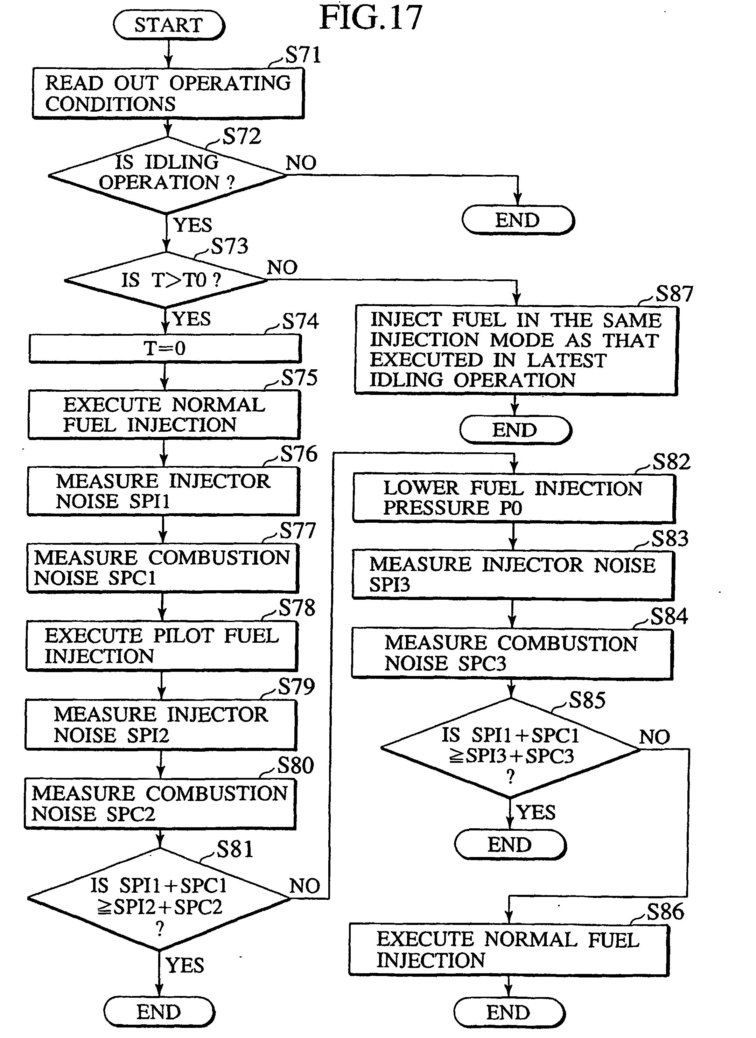

In particular, as shown in FIG. 17, steps S71 to S81 and step S87 are executed in the same manner as shown in the flow chart of FIG. 16. In step S81, if the normal fuel injection mode has a lower noise level than the pilot fuel injection mode, the operation goes to step S82 to reduce the injection pressure level by the given amount P0 and steps S83 and S84 allow the injector noise SPI3 and the combustion noise SPC3 to be measured, respectively.

Then, in step S85, a comparison is made between the sum SPI1 + SPC1 of the noise in the normal fuel injection mode and the sum SPI3 + SPC3 of the noise in the pilot fuel injection mode. In case of SPI1 + SPC1 > SPI3 + SPC3, since the pilot fuel injection with the lowered fuel injection pressure provides a lowered noise, the pilot fuel injection with the lowered fuel injection pressure is continuously implemented and, if not, the operation goes to step S86 which changes over the fuel injection into the normal fuel injection mode.

With such arrangement of the fuel injection control system of the seventh preferred embodiment, the pilot injection is carried out as frequent as possible and the noise reduction can be effectively attained.

Also, in the sixth and seventh preferred embodiments, the fuel injection control systems require the provision of the sensors as compared to the first to fifth preferred embodiments, thereby allowing the actual noises to be detected to effectuate the change-over the fuel injection modes to cope with various models of the engines or with a change with the passage of time in the noise characteristic of the engine.

In the fuel injection control system of the present invention, an important feature concerns a control unit controlling a fuel injection on the basis of a combustion noise derived from combustion in the internal combustion engine and a fuel injection noise derived from the fuel injection.

With such a feature of the present invention, not only the combustion noise but also the fuel injection noise is used for determining the engine noise to obtain accurate engine noise so as to allow the fuel injection to be controlled on the basis of accurately detected engine noise for thereby increasing the noise reducing performance of the engine.

Another feature of the fuel injection control system of the present invention concerns the control unit having fuel injection modes which are selectively executed. The control unit executes a noise comparison, with respect to engine operating conditions, between a sum of the combustion noise and the fuel injection noise in one of the fuel injection modes and that of the combustion noise and the fuel injection noise in another one of the fuel injection modes to select one of the fuel injection modes correlated with a smaller value of the sum.

With such a feature of the present invention, the engine noise level can be judged on the basis of the sum of the combustion noise and the fuel injection noise. This enables the engine noise level to be accurately judged during respective fuel injection modes for thereby properly selecting the fuel injection modes to effectively reduce the engine noise.

Another feature of the fuel injection control system of the present invention concerns the control unit executing the noise comparison of the sum of the combustion noise and the fuel injection noise on the basis of noise maps described with noise level data.

With such a feature of the present invention, the comparison is made about the combustion noise and the injector noise during the operation of the engine in respective fuel injection modes using the noise map described with preliminarily measured noise level data, with a resultant capability of conducting the comparison in relevant engine noises without the need for changing over the operating modes of the engine. Thus, it is possible for the engine operating performance during change-over of the engine operation modes to be prevented from being deteriorated, eliminating the need for noise sensors with a reduced manufacturing cost.

Another feature of the fuel injection control system concerns the noise maps involving the combustion noise and the fuel injection noise, the sum thereof, or an entire noise of the internal combustion engine including the combustion noise and the fuel injection noise. Each of the noise maps is described in terms of the fuel injection modes.

With such a feature of the present invention, the noise maps are correlated with the respective fuel injection modes to allow the noise level data to be extracted from the noise maps for the comparison, enabling the engine noise level to be judged in an accurate and easy manner.

Another feature of the fuel injection control system of the present invention concerns the noise maps described with differences in noise levels correlated with the combustion noise, the fuel injection noise or a mechanical noise involving the fuel injection noise when one of the fuel injection modes is changed to another one.

With such a feature of the present invention, the noise maps are described with the differential noise levels occurring in the respective fuel injection modes, making it possible to reduce the number of the noise maps to allow a memory of the control unit to be effectively utilized.

Another feature of the fuel injection control system of the present invention concerns the noise maps described with data representing the fuel injection modes to be selected with respect to the engine operating conditions on the basis of the combustion noise and the fuel injection noise.

With such a feature of the present invention, the noise maps are directly described with the noise level data of the fuel injection mode to be selected upon determination of the sum of the combustion noise and the fuel injection noise for each of the operating conditions of the engine, with a resultant capability of selecting one of the fuel injection modes to reduce engine noise in the simplest way with the use of a minimum number of the noise maps.

In another feature of the fuel injection control system of the present invention, each of the engine operating conditions corresponds to an engine operating parameter including at least one of an engine speed, an accelerator opening degree, a demanded output torque value, and a fuel injection quantity for each engine cycle. The control unit executes the noise comparison to select one of the fuel injection modes with respect to the engine operating conditions each corresponding to the engine operating parameter.

With such a feature of the present invention, the operating parameters involve at least one of the engine speed, the accelerator opening degree and the fuel injection quantity for each cycle, allowing the control unit to effectively reduce the engine noise during a steady operating condition of the engine.

In another feature of the fuel injection control system of the present invention, the engine operating parameter further includes at least one of a fuel injection pressure, an air intake pressure and an EGR rate.

With such a feature of the present invention, the presence of the operating parameters composed of the fuel injection pressure, the air intake pressure and the EGR rate enables the control unit to obtain the injector noise and the combustion noise, respectively, in a more accurate manner during the operating conditions of the engine involving a transition period thereof for thereby properly selecting the fuel injection mode according to the engine operating parameters.

In another feature of the fuel injection control system of the present invention, the engine operating parameter further includes at least one of a water coolant temperature of the internal combustion engine and an oil coolant temperature of the internal combustion engine.

With such a feature of the present invention, the presence of the engine operating parameter composed of the engine coolant temperature allows the control unit to obtain the noise level in the accurate manner during a time period from a cold start to a warmed state.

In another feature of the fuel injection control system of the present invention, there is provided that a combustion noise sensor detecting the combustion noise when the internal combustion engine is operated, and an injector noise sensor detecting the fuel injection noise when the internal combustion engine is operated. The control unit controls the fuel injection on the basis of the combustion noise detected by the combustion noise sensor, the fuel injection noise detected by injector noise sensor or the sum of the combustion noise and the fuel injection noise.

With such a feature of the present invention, changing over the fuel injection modes upon the detection of the actual noise allows the control unit to cope with various deviations of engine characteristics or with changes in noise characteristic with the passage of time.

In another feature of the fuel injection control system of the present invention, the internal combustion engine is a diesel engine, and the fuel injection modes has a normal fuel injection mode executing a fuel injection with a single mode in which a fuel is injected once to one cylinder in one engine cycle and a pilot fuel injection mode executing the fuel injection with a dual mode in which the fuel is plurally injected to one cylinder in one engine cycle.

With such a feature of the present invention, for example, in the pilot fuel injection mode, the combustion noise is reduced to a lower value than that of the normal fuel injection with the single injection mode whereas the injector noise is increased due to the increase of the number of the fuel injections. This means that the engine noise is varied in dependence on the sum of the combustion noise and the injector noise in each of the fuel injection modes. Thus, the change-over operation of the fuel injection modes can be effective for reducing the noise of the engine.

In another feature of the fuel injection control system of the present invention, when the control unit selects the normal fuel injection mode, the control unit executes a low temperature premixed combustion.

With such a feature of the present invention, by the low temperature premixed combustion technology during the normal fuel injection mode with the single injection mode, the combustion noise can be effectively lowered.

In another feature of the fuel injection control system of the present invention, even when the fuel injection in the normal fuel injection mode has a lower noise level than that of the pilot fuel injection mode during the noise comparison, the control unit maintains the pilot fuel injection mode with a fuel injection pressure at a given lower value instead of changing over the fuel injection modes to the normal injection mode.

With such a feature of the present invention, in case of the large noise caused during the multiple injection modes, the fuel injection pressure is lowered, thereby enabling a reduction in combustion noise with the multiple injection modes while achieving a decrease in the fuel injection noise.

In another feature of the fuel injection control system of the present invention, the control unit has fuel injection modes which are selectively executed, and the control unit changes over the fuel injection modes for a given short time interval in a predetermined engine operating condition to obtain the combustion noise and the fuel injection noise when one of the fuel injection modes is selected and those when another one of the fuel injection modes is selected to execute the noise comparison and select one of the fuel injection modes in which the sum of the combustion noise and the fuel injection noise is the least.

With such a feature of the present invention, since the engine noise level is judged in response to the sum of the combustion noise and the fuel injection noise in the sequentially executed fuel injection modes, the judgment of the engine noise level can be accurately executed.

In another feature of the fuel injection control system of the present invention, the control unit controls the fuel injection modes such that after the noise comparison is made by changing over the fuel injection modes, the noise comparison is interrupted for the given time interval to allow the fuel injection in the predetermined operating condition to be executed in the same as the latest fuel injection mode executed in the predetermined operating condition.

With such a feature of the present invention, by interrupting the change-over operation for the given time interval, the deterioration in the operating performance that would occur due to the frequent changing over of the engine operation can be precluded.

In another feature of the fuel injection control system of the present invention, the control unit controls the fuel injection modes such that the noise comparison is made by changing over the fuel injection modes and, even when the fuel injection in the normal fuel injection mode has a lower noise level than that of the pilot fuel injection mode during the noise comparison, the control unit maintains the pilot fuel injection mode with a fuel injection pressure at a given lower value instead of changing over the fuel injection modes to the normal injection mode. The control unit subsequently controls the fuel injection modes such that the noise comparison is made and one of the fuel injection modes, in which the sum of the combustion noise and the fuel injection noise is the least, is selected.

With such a feature of the present invention, in case of the large noise caused during the multiple injection modes, the fuel injection pressure is lowered, thereby enabling a reduction in combustion noise with the multiple injection modes while achieving a decrease in the fuel injection noise. Also, by comparing the engine noise level between the normal fuel injection mode with the single injection mode and the pilot fuel injection mode with the multiple fuel injection modes enables a selection of either one of the fuel injection modes to provide the lowest noise, with a resultant reduction in noise.

In another feature of the fuel injection control system of the present invention, a cylinder pressure sensor is attached to the internal combustion engine to detect a pressure in a combustion chamber of the internal combustion engine. The control unit calculates the combustion noise on the basis of the pressure of the combustion chamber.

With such a feature of the present invention, it is possible for the control unit to precisely detect the combustion noise separately from the fuel injection noise.

In another feature of the fuel injection control system of the present invention, an acceleration sensor is attached to the internal combustion engine to detect an acceleration degree of a fuel injector. The control unit calculates the fuel injection noise on the basis of the acceleration degree of the fuel injector.

With such a feature of the present invention, it is possible for the control unit to precisely detect the fuel injection noise separately from the combustion noise on the basis of the detected value of the acceleration sensor mounted near the fuel injection system of the engine.

In another feature of the fuel injection control system of the present invention, the predetermined operating condition is an idling operation of the internal combustion engine.

With such a feature of the present invention, the noise comparison is enabled while changing over the fuel injection modes during the idling operation that would cause the increase in the noise level with the multiple fuel injection modes, thereby reducing the idling noise.

Although the invention has been described above by reference to certain embodiments of the invention, the invention is not limited to the embodiments described above. Modifications and variations of the embodiments described above will occur to those skilled in the art, in light of the teachings. The scope of the invention is defined with reference to the following claims.

## Claims

1. A fuel injection control system (11) of an internal combustion engine (10) having a fuel injection system executing a fuel injection, comprising a control unit (40),
**characterized in that**
the control unit (40) selectively executes fuel injection modes and, with respect to engine operating conditions, controls the fuel injection to select the fuel injection modes on the basis of a combustion noise derived from combustion in the internal combustion engine (10) and a fuel injection noise derived from the fuel injection.

2. A fuel injection control system according to claim 1, **characterized in that** the control unit (40) executes a noise comparison, with respect to engine operating conditions, between a sum of the combustion noise and the fuel injection noise in one of the fuel injection modes and that of the combustion noise and the fuel injection noise in another one of the fuel injection modes to select one of the fuel injection modes correlated with a smaller value of the sum.

3. A fuel injection control system according to claim 2, wherein the control unit (40) executes the noise comparison of the sum of the combustion noise and the fuel injection noise on the basis of noise maps described with noise level data.

4. A fuel injection control system according to claim 3, wherein the noise maps involve the combustion noise and the fuel injection noise, the sum thereof, or an entire noise of the internal combustion engine including the combustion noise and the fuel injection noise, each of the noise maps being described in terms of the fuel injection modes.

5. A fuel injection control system according to claim 3, wherein the noise maps are described with differences in noise levels correlated with the combustion noise, the fuel injection noise or a mechanical noise involving the fuel injection noise when one of the fuel injection modes is changed to another one.

6. A fuel injection control system according to claim 3, wherein the noise maps are described with data representing the fuel injection modes to be selected with respect to the engine operating conditions on the basis of the combustion noise and the fuel injection noise.

7. A fuel injection control system according to any one of claims 2 to 6, wherein each of the engine operating conditions corresponds to an engine operating parameter including at least one of an engine speed, an accelerator opening degree, a demanded output torque value, and a fuel injection quantity for each engine cycle,
and wherein the control unit (40) executes the noise comparison to select one of the fuel injection modes with respect to the engine operating conditions each corresponding to the engine operating parameter.

8. A fuel injection control system according to claim 7, wherein the engine operating parameter further includes at least one of a fuel injection pressure, an air intake pressure and an EGR rate.

9. A fuel injection control system according to claim 7, wherein the engine operating parameter further includes at least one of a water coolant temperature of the internal combustion engine (10) and an oil coolant temperature of the internal combustion engine.

10. A fuel injection control system according to claim 1, further comprising:
a combustion noise sensor (102) detecting the combustion noise when the internal combustion engine is operated; and
an injector noise sensor (100) detecting the fuel injection noise when the internal combustion engine is operated,
wherein the control unit (40) controls the fuel injection on the basis of the combustion noise detected by the combustion noise sensor, the fuel injection noise detected by injector noise sensor or the sum of the combustion noise and the fuel injection noise.

11. A fuel injection control system according to claim 10, wherein the control unit (40) has fuel injection modes which are selectively executed, and wherein the control unit changes over the fuel injection modes for a given short time interval in a predetermined engine operating condition to obtain the combustion noise and the fuel injection noise when one of the fuel injection modes is selected and those when another one of the fuel injection modes is selected to execute the noise comparison and select one of the fuel injection modes in which the sum of the combustion noise and the fuel injection noise is the least.

12. A fuel injection control system according to claim 11, wherein the control unit (40) controls the fuel injection modes such that after the noise comparison is made by changing over the fuel injection modes, the noise comparison is interrupted for the given time interval to allow the fuel injection in the predetermined operating condition to be executed in the same as the latest fuel injection mode executed in the predetermined operating condition.

13. A fuel injection control system according to claim 11, wherein the control unit (40) controls the fuel injection modes such that the noise comparison is made by changing over the fuel injection modes and, even when the fuel injection in the normal fuel injection mode has a lower noise level than that of the pilot fuel injection mode during the noise comparison, the control unit maintains the pilot fuel injection mode with a fuel injection pressure at a given lower value instead of changing over the fuel injection modes to the normal injection mode,
and wherein the control unit subsequently controls the fuel injection modes such that the noise comparison is made and one of the fuel injection modes, in which the sum of the combustion noise and the fuel injection noise is the least, is selected.

14. A fuel injection control system according to claim 11, further comprises a cylinder pressure sensor (102) attached to the internal combustion engine (10) and detecting a pressure in a combustion chamber (104) of the internal combustion engine,
wherein the control unit (40) calculates the combustion noise on the basis of the pressure of the combustion chamber.

15. A fuel injection control system according to claim 11, further comprises an acceleration sensor (100) attached to the internal combustion engine (10) and detecting an acceleration degree of a fuel injector (20),
wherein the control unit (40) calculates the fuel injection noise on the basis of the acceleration degree of the fuel injector.

16. A fuel injection control system according to any one of claims 11 to 15, wherein the predetermined engine operating condition is an idling operation of the internal combustion engine (10).

17. A fuel injection control system according to claim 2 or 11, wherein the internal combustion engine is a diesel engine, and wherein the fuel injection modes has a normal fuel injection mode executing a fuel injection with a single mode in which a fuel is injected once to one cylinder in one engine cycle and a pilot fuel injection mode executing the fuel injection with a dual mode in which the fuel is plurally injected to one cylinder in one engine cycle.

18. A fuel injection control system according to claim 17, wherein when the control unit (40) selects the normal fuel injection mode, the control unit executes a low temperature premixed combustion.

19. A fuel injection control system according to claim 17, wherein even when the fuel injection in the normal fuel injection mode has a lower noise level than that of the pilot fuel injection mode during the noise comparison, the control unit (40) maintains the pilot fuel injection mode with a fuel injection pressure at a given lower value instead of changing over the fuel injection modes to the normal injection mode.

20. A fuel injection control method of an internal combustion engine (10) having a fuel injection system executing a fuel injection, **characterized in that** a control unit (40) selectively executes fuel injection modes and, with respect to engine operating conditions, the fuel injection is controlled to select the fuel injection modes on the basis of a combustion noise derived from combustion in the internal combustion engine (10) and a fuel injection noise derived from the fuel injection.

## Patentansprüche

1. Kraftstoffeinspritz-Steuersystem (11) einer Brennkraftmaschine (10), die ein Kraftstoffeinspritzsystem hat, das eine Kraftstoffeinspritzung ausführt, mit einer Steuereinheit (40),
**dadurch gekennzeichnet, daß**
die Steuereinheit (40) wahlweise Kraftstoffeinspritzmodi ausführt und, in Bezug auf Motorbetriebsbedingungen, die Kraftstoffeinspritzung steuert, um die Kraftstoffeinspritzmodi auf der Basis eines Verbrennungsgeräusches, abgeleitet aus der Verbrennung in der Brennkraftmaschine (10), und eines Kraftstoffeinspritzgeräusches, abgeleitet aus der Kraftstoffeinspritzung, zu steuern.

2. Kraftstoffeinspritz-Steuersystem nach Anspruch 1, **dadurch gekennzeichnet, daß** die Steuereinheit (40) einen Geräuschvergleich in Bezug auf die Motorbetriebsbedingungen zwischen einer Summe von Verbrennungsgeräusch und Kraftstoffeinspritzgeräusch in einer der Kraftstoffeinspritzmodi und demjenigen des Verbrennungsgeräusches und des Kraftstoffeinspritzgeräusches in einem weiteren der Kraftstoffeinspritzmodi ausführt, um einen der Kraftstoffeinspritzmodi auszuwählen, der einem kleineren Wert dieser Summe entspricht.

3. Kraftstoffeinspritz-Steuersystem nach Anspruch 2, wobei die Steuereinheit (40) den Geräuschvergleich der Summe aus Verbrennungsgeräusch und Kraftstoffeinspritzgeräusch auf der Grundlage von Geräuschdiagrammen ausführt, die Geräuschniveaudaten enthalten.

4. Kraftstoffeinspritz-Steuersystem nach Anspruch 3, wobei die Geräuschdiagramme das Verbrennungsgeräusch und das Kraftstoffeinspritzgeräusch enthalten, die Summe derselben oder ein Gesamtgeräusch der Brennkraftmaschine einschließlich des Verbrennungsgeräusches und des Kraftstoffeinspritzgeräusches, wobei jedes der Geräuschdiagramme in Einheiten der Kraftstoffeinspritzmodi dargestellt ist.

5. Kraftstoffeinspritz-Steuersystem nach Anspruch 3, wobei die Geräuschdiagramme aufgestellt sind als Differenzen in Geräuschniveaus korreliert mit dem Verbrennungsgeräusch, dem Kraftstoffeinspritzgeräusch oder einem mechanischen Geräusch, daß das Kraftstoffeinspritzgeräusch enthält, wenn einer der Kraftstoffeinspritzmodi gegen einen anderen gewechselt wird.

6. Kraftstoffeinspritz-Steuersystem nach Anspruch 3, wobei die Geräuschdiagramme mit Daten aufgestellt sind, die die Kraftstoffeinspritzmodi repräsentieren, zur Auswahl derselben in Bezug auf die Motorbetriebsbedingungen, auf der Grundlage des Verbrennungsgeräusches und des Kraftstoffeinspritzgeräusches.

7. Kraftstoffeinspritz-Steuersystem nach einem der Ansprüche 2 bis 6, wobei jede der Motorbetriebsbedingungen einem Motorbetriebsparameter entspricht, der zumindest eines von Motordrehzahl, Beschleunigeröffnungsgrad, geforderter Ausgangsdrehmomentwert und Kraftstoffeinspritzmenge für jeden Motorzyklus enthält, und wobei die Steuereinheit (40) den Geräuschvergleich ausführt, um einen der Kraftstoffeinspritzmodi in Bezug auf die Motorbetriebsbedingungen auszuwählen, die jeweils dem Motorbetriebsparameter entsprechen.

8. Kraftstoffeinspritz-Steuersystem nach Anspruch 7, wobei der Motorbetriebsparameter außerdem zumindest einen von Kraftstoffeinspritzdruck, Ansaugdruck oder Abgasrückführungsrate enthält.

9. Kraftstoffeinspritz-Steuersystem nach Anspruch 7, wobei der Motorbetriebsparameter außerdem zumindest einen von Wasserkühlmitteltemperatur der Brennkraftmaschine (10) und einer Ölkühlmitteltemperatur der Brennkraftmaschine enthält.

10. Kraftstoffeinspritz-Steuersystem nach Anspruch 1, mit außerdem:
einem Verbrennungsgeräuschsensor (102), der das Verbrennungsgeräusch erfaßt, wenn die Brennkraftmaschine in Betrieb ist; und
einen Einspritzgeräuschsensor (100), der das Kraftstoffeinspritzgeräusch erfaßt, wenn die Brennkraftmaschine in Betrieb ist,
wobei die Steuereinheit (40) die Kraftstoffeinspritzung auf der Grundlage des Verbrennungsgeräusches, erfaßt durch den Verbrennungsgeräuschsensor, des Kraftstoffeinspritzgeräusches, erfaßt durch den Einspritzgeräuschsensor oder die Summe von Verbrennungsgeräusch und Kraftstoffeinspritzgeräusch steuert.

11. Kraftstoffeinspritz-Steuersystem nach Anspruch 10, wobei die Steuereinheit (40) Kraftstoffeinspritzmodi hat, die wahlweise ausgeführt werden, und wobei die Steuereinheit die Kraftstoffeinspritzmodi für eine kurze Zeitspanne in einem vorbestimmten Motorbetriebszustand wechselt, um das Verbrennungsgeräusch und das Kraftstoffeinspritzgeräusch zu erhalten, wenn eine der Kraftstoffeinspritzmodi ausgewählt ist und jene zu erhalten, wenn eine andere der Kraftstoffeinspritzmodi ausgewählt ist, um den Geräuschvergleich auszuführen und einen der Kraftstoffeinspritzmodi auszuführen, bei dem die Summe von Verbrennungsgeräusch und Kraftstoffeinspritzgeräusch am geringsten ist.

12. Kraftstoffeinspritz-Steuersystem nach Anspruch 11, wobei die Steuereinheit (40) die Kraftstoffeinspritzmodi derart steuert, daß dann, nachdem der Geräuschvergleich durch Wechsel zwischen Kraftstoffeinspritzmodi gemacht ist, der Geräuschvergleich für eine bestimmte Zeitspanne unterbrochen wird, um zu gestatten, daß die Kraftstoffeinspritzung in dem vorbestimmten Betriebszustand ausgeführt wird in der gleichen Weise wie der letzte Kraftstoffeinspritzmodus, ausgeführt in dem vorbestimmten Betriebszustand.

13. Kraftstoffeirispritz-Steuersystem nach Anspruch 11, wobei die Steuereinheit (40) die Kraftstoffeinspritzmodi derart steuert, daß der Geräuschvergleich ausgeführt wird, durch Wechsel zwischen Kraftstoffeinspritzmodi und, selbst wenn die Kraftstoffeinspritzung in dem normalen Kraftstoffeinspritzmodus ein niedrigeres Geräuschniveau als dasjenige während des Pilot-Kraftstoffeinspritzmodus während des Geräuschvergleiches ergibt, die Steuereinheit den Pilot-Kraftstoffeinspritzmodus beibehält, mit einem Kraftstoffeinspritzdruck auf einem gegebenen niedrigeren Niveau anstelle des Wechsels des Kraftstoffeinspritzmodus zu dem normalen Einspritzmodus, und wobei die Steuereinheit anschließend die Kraftstoffeinspritzmodi derart steuert, daß der Geräuschvergleich ausgeführt wird und einer der Kraftstoffeinspritzmodi, bei dem die Summe von Verbrennungsgeräusch und Kraftstoffeinspritzgeräusch am geringsten ist, ausgewählt wird.

14. Kraftstoffeinspritz-Steuersystem nach Anspruch 11, mit außerdem einem Zylinderdrucksensor (102), verbunden mit der Brennkraftmaschine (10), der einen Druck in einer Verbrennungskammer (104) der Brennkraftmaschine erfaßt,
wobei die Steuereinheit (40) das Verbrennungsgeräusch auf der Grundlage des Druckes der Verbrennungskammer berechnet.

15. Kraftstoffeinspritz-Steuersystem nach Anspruch 11 mit außerdem einem Beschleunigungssensor (100), verbunden mit der Brennkraftmaschine (10), der einen Beschleunigungsgrad eines Kraftstoffeinspritzers (20) erfaßt,
wobei die Steuereinheit (40) das Kraftstoffeinspritzgeräusch auf der Grundlage des Beschleunigungsgrades des Kraftstoffeinspritzers berechnet.

16. Kraftstoffeinspritz-Steuersystem nach einem der Ansprüche 11 bis 15, wobei der vorbestimmte Motorbetriebszustand ein Leerlaufzustand der Brennkraftmaschine (10) ist.

17. Kraftstoffeinspritz-Steuersystem nach Anspruch 2 oder 11, wobei die Brennkraftmaschine ein Dieselmotor ist, und wobei die Kraftstoffeinspritzmodi einen Normal-Kraftstoffeinspritzmodus, der eine Kraftstoffeinspritzung mit einem einzigen Modus ausführt, in dem Kraftstoff einmal in einen Zylinder in einem Motorzyklus eingespritzt wird, und einen Pilot-Kraftstoffeinspritzmodus, der die Kraftstoffeinspritzung in einem dualen Modus ausführt, bei dem Kraftstoff mehrfach in einen Zylinder in einem Motorzyklus eingespritzt wird.

18. Kraftstoffeinspritz-Steuersystem nach Anspruch 17, wobei dann, wenn die Steuereinheit (40) den Normal-Kraftstoffeinspritzmodus auswählt, die Steuereinheit eine Niedrigtemperatur, Vormischverbrennung ausführt.

19. Kraftstoffeinspritz-Steuersystem nach Anspruch 17, wobei selbst dann, wenn die Kraftstoffeinspritzung in dem Normal-Kraftstoffeinspritzmodus ein niedrigeres Geräuschniveau hat als bei dem Pilot-Kraftstoffeinspritzmodus während des Geräuschvergleiches, die Steuereinheit (40) den Pilot-Kraftstoffeinspritzmodus beibehält, mit einem Kraftstoffeinspritzdruck auf einem gegebenen niedrigeren Niveau, anstelle den Kraftstoffeinspritzmodus in den Normal-Einspritzmodus zu wechseln.

20. Kraftstoffeinspritz-Steuerverfahren einer Brennkraftmaschine (10), die ein Kraftstoffeinspritzsystem hat, das eine Kraftstoffeinspritzung ausführt, **dadurch gekennzeichnet, daß** eine Steuereinheit (40) wahlweise Kraftstoffeinspritzmodi ausführt und, in Bezug auf Motorbetriebsbedingungen, die Kraftstoffeinspritzung gesteuert wird, um die Kraftstoffeinspritzmodi auf der Grundlage eines Verbrennungsgeräusches, abgeleitet aus der Verbrennung in der Brennkraftmaschine (10) und eines Kraftstoffeinspritzgeräusches, abgeleitet von der Kraftstoffeinspritzung, auszuwählen.

## Revendications

1. Système de commande d'injection de carburant (11) d'un moteur à combustion interne (10) ayant un système d'injection de carburant exécutant une injection de carburant, comportant une unité de commande (40),
**caractérisé en ce que**
l'unité de commande (40) exécute de manière sélective des modes d'injection de carburant et, par rapport à des conditions de fonctionnement du moteur, commande l'injection de carburant pour sélectionner les modes d'injection de carburant sur la base d'un bruit de combustion provenant d'une combustion dans le moteur à combustion interne (10), et d'un bruit d'injection de carburant provenant de l'injection de carburant.

2. Système de commande d'injection de carburant selon la revendication 1, **caractérisé en ce que** l'unité de commande (40) exécute une comparaison de bruits, par rapport à des conditions de fonctionnement du moteur, entre une somme du bruit de combustion et du bruit d'injection de carburant dans l'un des modes d'injection de carburant, et celle du bruit de combustion et du bruit d'injection de carburant dans un autre des modes d'injection de carburant, pour sélectionner l'un des modes d'injection de carburant mis en corrélation avec une valeur plus petite de la somme.

3. Système de commande d'injection de carburant selon la revendication 2, dans lequel l'unité de commande (40) exécute la comparaison de bruits de la somme du bruit de combustion et du bruit d'injection de carburant sur la base de cartes de bruits décrites avec des données de niveau de bruit.

4. Système de commande d'injection de carburant selon la revendication 3, dans lequel les cartes de bruits impliquent le bruit de combustion et le bruit d'injection de carburant, leur somme, ou un bruit entier du moteur à combustion interne, y compris le bruit de combustion et le bruit d'injection de carburant, chacune des cartes de bruit étant décrite en fonction des modes d'injection de carburant.

5. Système de commande d'injection de carburant selon la revendication 3, dans lequel les cartes de bruits sont décrites avec des différences de niveaux de bruit mises en corrélation avec le bruit de combustion, le bruit d'injection de carburant ou un bruit mécanique impliquant le bruit d'injection de carburant lorsque l'un des modes d'injection de carburant est changé pour un autre.

6. Système de commande d'injection de carburant selon la revendication 3, dans lequel les cartes de bruits sont décrites à l'aide de données représentant les modes d'injection de carburant devant être sélectionnés par rapport aux conditions de fonctionnement du moteur sur la base du bruit de combustion et du bruit d'injection de carburant.

7. Système de commande d'injection de carburant selon l'une quelconque des revendications 2 à 6, dans lequel chacune des conditions de fonctionnement du moteur correspond à un paramètre de fonctionnement du moteur incluant au moins un paramètre parmi une vitesse de moteur, un degré d'ouverture d'accélérateur, une valeur de couple de sortie demandée et une quantité d'injection de carburant pour chaque cycle de moteur,
et dans lequel l'unité de commande (40) exécute la comparaison de bruits pour sélectionner l'un des modes d'injection de carburant par rapport aux conditions de fonctionnement du moteur, correspondant chacun au paramètre de fonctionnement du moteur.

8. Système de commande d'injection de carburant selon la revendication 7, dans lequel le paramètre de fonctionnement du moteur comporte en outre au moins un paramètre parmi une pression d'injection de carburant, une pression d'admission d'air et un débit de remise en circulation des gaz d'échappement (EGR).

9. Système de commande d'injection de carburant selon la revendication 7, dans lequel le paramètre de fonctionnement du moteur comporte en outre au moins un paramètre parmi une température de liquide de refroidissement à eau du moteur à combustion interne (10), et une température de liquide de refroidissement à l'huile du moteur à combustion interne.

10. Système de commande d'injection de carburant selon la revendication 1, comportant en outre :
un capteur de bruit de combustion (102) détectant le bruit de combustion lorsque le moteur à combustion interne fonctionne, et
un capteur de bruit d'injecteur (100) détectant le bruit d'injection de carburant lorsque le moteur à combustion interne fonctionne,
dans lequel l'unité de commande (40) commande l'injection de carburant sur la base du bruit de combustion détecté par le capteur de bruit de combustion, du bruit d'injection de carburant détecté par le capteur de bruit d'injecteur, ou de la somme du bruit de combustion et du bruit d'injection de carburant.

11. Système de commande d'injection de carburant selon la revendication 10, dans lequel l'unité de commande (40) a des modes d'injection de carburant qui sont exécutés de manière sélective, et dans lequel l'unité de commande change les modes d'injection de carburant pendant un intervalle de temps court donné dans une condition de fonctionnement du moteur prédéterminée pour obtenir le bruit de combustion et le bruit d'injection de carburant lorsque l'un des modes d'injection de carburant est sélectionné, et ceux lorsqu'un autre des modes d'injection de carburant est sélectionné, pour exécuter la comparaison de bruits et sélectionner l'un des modes d'injection de carburant dans lequel la somme du bruit de combustion et du bruit d'injection de carburant et la moindre.

12. Système de commande d'injection de carburant selon la revendication 11, dans lequel l'unité de commande (40) commande les modes d'injection de carburant de telle sorte qu'après que la comparaison de bruits a été effectuée en changeant les modes d'injection de carburant, la comparaison de bruits est interrompu pendant l'intervalle de temps donné pour permettre à l'injection de carburant dans la condition de fonctionnement prédéterminée d'être exécutée dans le même mode que le dernier mode d'injection de carburant exécuté dans la condition de fonctionnement prédéterminée.

13. Système de commande d'injection de carburant selon la revendication 11, dans lequel l'unité de commande (40) commande les modes d'injection de carburant de telle sorte que la comparaison de bruits est effectuée en changeant les modes d'injection de carburant et, même lorsque l'injection de carburant dans le mode d'injection de carburant normal a un niveau de bruit inférieur à celui du mode d'injection de carburant pilote pendant la comparaison de bruits, l'unité de commande maintient le mode d'injection de carburant pilote avec une pression d'injection de carburant à une valeur inférieure donnée au lieu de changer les modes d'injection de carburant pour le mode d'injection normal,
et dans lequel l'unité de commande commande à la suite les modes d'injection de carburant de telle sorte que la comparaison de bruits est effectuée, et l'un des modes d'injection de carburant, dans lequel la somme du bruit de combustion et du bruit d'injection de carburant est la moindre, est sélectionné.

14. Système de commande d'injection de carburant selon la revendication 11, comportant en outre un capteur de pression de cylindre (102) fixé sur le moteur à combustion interne (10), et détectant une pression dans une chambre de combustion (104) du moteur à combustion interne,
dans lequel l'unité de commande (40) calcule le bruit de combustion sur la base de la pression de la chambre de combustion.

15. Système de commande d'injection de carburant selon la revendication 11, comportant en outre un capteur d'accélération (100) fixé sur le moteur à combustion interne (10), et détectant un degré d'accélération d'un injecteur de carburant (20),
dans lequel l'unité de commande (40) calcule le bruit d'injection de carburant sur la base du degré d'accélération de l'injecteur de carburant.

16. Système de commande d'injection de carburant selon l'une quelconque des revendications 11 à 15, dans lequel la condition de fonctionnement du moteur prédéterminée est un fonctionnement au ralenti du moteur à combustion interne (10).

17. Système de commande d'injection de carburant selon la revendication 2 ou 11, dans lequel le moteur à combustion interne est un moteur Diesel, et
dans lequel les modes d'injection de carburant sont un mode d'injection de carburant normal exécutant une injection de carburant avec un mode unique dans lequel un carburant est injecté instantanément vers un cylindre dans un cycle moteur, et un mode d'injection de carburant pilote exécutant l'injection de carburant avec un mode double dans lequel le carburant est injecté de manière plurielle vers un cylindre dans un cycle de moteur.

18. Système de commande d'injection de carburant selon la revendication 17, dans lequel lorsque l'unité de commande (40) sélectionne le mode d'injection de carburant normal, l'unité de commande exécute une combustion pré-mélangée basse température.

19. Système de commande d'injection de carburant selon la revendication 17, dans lequel même lorsque l'injection de carburant dans le mode d'injection de carburant normal a un niveau de bruit inférieur à celui du mode d'injection de carburant pilote pendant la comparaison de bruits, l'unité de commande (40) maintient le mode d'injection de carburant pilote avec une pression d'injection de carburant à une valeur inférieure donnée au lieu de changer les modes d'injection de carburant pour le mode d'injection normal.

20. Procédé de commande d'injection de carburant d'un moteur à combustion interne (10) ayant un système d'injection de carburant exécutant une injection de carburant, **caractérisé en ce qu'**une unité de commande (40) exécute de manière sélective des modes d'injection de carburant et, par rapport à des conditions de fonctionnement du moteur, l'injection de carburant est commandée pour sélectionner les modes d'injection de carburant sur la base d'un bruit de combustion provenant d'une combustion dans le moteur à combustion interne (10), et d'un bruit d'injection de carburant provenant de l'injection de carburant.
